(19) Europäisches Patentamt
European Patent Office
Office européen des brevets

(11) **EP 1 941 559 B1**

(12) **EUROPÄISCHE PATENTSCHRIFT**

(45) Veröffentlichungstag und Bekanntmachung des Hinweises auf die Patenterteilung:
**11.01.2012 Patentblatt 2012/02**

(21) Anmeldenummer: **06806487.2**

(22) Anmeldetag: **24.10.2006**

(51) Int Cl.:
***H01L 41/09*** *(2006.01)*

(86) Internationale Anmeldenummer:
**PCT/EP2006/010220**

(87) Internationale Veröffentlichungsnummer:
**WO 2007/048569 (03.05.2007 Gazette 2007/18)**

(54) **PIEZOELEKTRISCHE BEWEGUNGSEINRICHTUNG**

PIEZOELECTRIC MOVEMENT DEVICE

DISPOSITIF DE DÉPLACEMENT PIÉZOÉLECTRIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.10.2005 DE 102005052132**

(43) Veröffentlichungstag der Anmeldung:
**09.07.2008 Patentblatt 2008/28**

(73) Patentinhaber: **Universität Hamburg**
**20355 Hamburg (DE)**

(72) Erfinder:
• **CHEN, Julian**
**White Plains, NY 10601 (US)**

• **PIETZSCH, Oswald**
**22589 Hamburg (DE)**
• **HAUDE, Daniel**
**20257 Hamburg (DE)**

(74) Vertreter: **Seemann, Ralph**
**Patentanwälte Seemann & Partner**
**Ballindamm 3**
**20095 Hamburg (DE)**

(56) Entgegenhaltungen:
**EP-A2- 0 309 886      WO-A-95/06428**
**US-A- 5 365 296      US-A- 5 907 212**

**Beschreibung**

Die Erfindung betrifft eine piezoelektrische Bewegungseinrichtung, insbesondere einen Motor, mit einer piezoelektrischen Vorrichtung, die einen Mittelbereich und zwei Endbereiche aufweist, und mit einem Bewegungskörper, der auf oder in einem Lager oder der piezoelektrischen Vorrichtung gelagert ist, wobei ein Endbereich ausgestaltet ist oder beide Endbereiche ausgestaltet sind, um eine Kraft in Richtung des Bewegungskörpers, insbesondere queraxial zu einer Längsachse der piezoelektrischen Vorrichtung, auf den Bewegungskörper auszuüben.

Eine derartige piezoelektrische Bewegungseinrichtung ist bekannt. Es handelt sich hierbei um den so genannten Inchworm der Firma EXFO, vormals Burleigh Instruments, Inc., East Worchester, N.Y.

Der Inchworm ist beispielsweise in der US 3,902,084 A und der US 3,902,085 A ausführlich beschrieben. Es handelt sich hierbei um eine piezoelektrische Bewegungseinrichtung mit einer Piezoröhre bzw. einer piezoelektrischen Vorrichtung, in der ein Schaft bzw. ein Bewegungskörper in der Röhre eingebracht ist. Um den Schaft bzw. den Bewegungskörper translatorisch zu bewegen, wird ein Endbereich der Piezoröhre durch Anlegen einer Spannung vom lichten Durchmesser her verkleinert, so dass eine Klemmung des Bewegungskörpers stattfindet. Anschließend wird ein Mittelbereich der Piezoröhre ausgedehnt oder zusammengezogen. Für dieses Beispiel wird angenommen, dass der Mittelbereich verlängert wird. Es wird dann auch der andere Endbereich vom lichten Durchmesser her durch Anlegen einer Spannung verkleinert, um den Bewegungskörper einzuklemmen. Anschließend wird der erste Endbereich geöffnet und der Mittelbereich in längsaxialer Richtung zusammengezogen, um so eine Bewegung des Bewegungskörpers in längsaxialer Richtung zu ermöglichen. Anschließend wird wieder der erste Endbereich in radialer Richtung bzw. quer zur längsaxialen Richtung verkleinert, d.h. der lichte Durchmesser verkleinert, um den Bewegungskörper zu klemmen und der zweite Endbereich wieder geöffnet bzw. die Klemmung beendet, so dass die Bewegungen von vorne beginnen können. Insgesamt ergibt sich eine schrittweise Bewegung des Bewegungskörpers in längsaxialer Richtung.

Der Inchworm gemäß diesen beiden US-Patentschriften ist sehr stabil, ist allerdings auch verbesserungsfähig. Zum einen ist die Auslenkung in radialer Richtung bzw. die Durchmesserverkleinerung beim Klemmen des Bewegungskörpers relativ klein, so dass bei tiefen Temperaturen eine sichere Klemmung nicht gewährleistet sein kann. Außerdem reibt das Piezomaterial am Bewegungskörper, so dass ein relativ hoher Verschleiß gegeben ist. Schließlich ist ausschließlich eine translatorische Bewegung möglich.

EP 0 309 886 A2 offenbart ein automatisches Ventil zur Regelung eines Wasserdurchflusses mit piezoelektrischer Betätigung. Hierbei wird ein Kolben längsaxial hin- und hergeschoben und steht im Kontakt mit einem Ventilkörper, wodurch ein Öffnen und ein Schließen des Ventils fein reguliert werden kann. Die piezoelektrische Betätigung weist dabei einen Mittelbereich und zwei Endbereiche auf, wobei die Endbereiche so ausgestaltet sind, dass sie eine Kraft auf den Kolben queraxial zur Längsachse des Kolbens ausüben. Hierbei sind mehrere Schichten von piezoelektrischen Stücken gebildet, die an der inneren und äußeren Seite Elektroden aufweisen. Diese funktionieren nach dem gleichen Prinzip wie der vorstehend genannte Inchworm der Firma Burleigh Instruments, Inc.

US 5 907 212 A offenbart einen elektromechanischen Wandler mit piezoelektrischem Antrieb zur Umsetzung in translatorischen Bewegungen. Hierfür ist eine Antriebsachse vorgesehen, wodurch beispielsweise eine schnelle und präzise Ausrichtung von Kameralinsen erfolgen kann. Es ist insbesondere eine piezoelektrische Bewegungseinrichtung offenbart, die einen Mittelbereich und zwei Endbereiche aufweist, die eine Kraft auf die Antriebsachse queraxial zu ihrer translatorischen Bewegungsrichtung ausüben.

Aus WO 95/06428 A1 ist ein Endoskop mit einem Schaft bekannt, der in seinem vorderen Endbereich einen beweglichen Abschnitt aufweist, in dem ein miniaturisiertes piezoelektrisches Antriebselement zur Bewegung des beweglichen Abschnitts vorgesehen ist. Das piezoelektrische Antriebselement ist als piezoelektrischer Linearbeweger ausgebildet.

US 5 365 296 A offenbart einen Motor, der über piezoelektrische Kräfte eine Linse in einem Objektiv verfährt. Zum Festklemmen wird ein Bimorph-Effekt ausgenutzt. In der zylindrischen Röhre des Objektivs sind entsprechende Lager für die zu bewegende Linse vorgesehen.

Es ist Aufgabe der vorliegenden Erfindung, den Einsatzbereich einer entsprechenden piezoelektrischen Bewegungseinrichtung zu erweitern und die Handhabung eines Bewegungskörpers der piezoelektrischen Bewegungseinrichtung sicherer zu gestalten.

Gelöst wird diese Aufgabe durch eine piezoelektrische Bewegungseinrichtung, insbesondere einen Motor, mit einer piezoelektrischen Vorrichtung, die einen Mittelbereich und zwei Endbereiche aufweist, und mit einem Bewegungskörper, der in der piezoelektrischen Vorrichtung gelagert ist, wobei ein Endbereich ausgestaltet ist oder beide Endbereiche ausgestaltet sind, um eine Kraft in Richtung des Bewegungskörpers, insbesondere queraxial zu einer Längsachse der piezoelektrischen Vorrichtung, auf den Bewegungskörper auszuüben, wobei der Mittelbereich ein piezoelektrischer Körper ist und die Endbereiche jeweils wenigstens zwei piezoelektrische Körper umfassen, die miteinander, insbesondere über Kontaktflächen, verbunden sind, wobei die Normalen der Kontaktflächen im Wesentlichen parallel zur Richtung der ausgeübten Kraft angeordnet sind, wobei die Endbereiche jeweils einen Bimorph bilden, wobei zwischen den zwei piezoelektrischen Körpern der Endbereiche eine Elektrode angeordnet ist, wobei die piezoelektrische Vorrichtung in den Endbereichen längsaxial geschlitzt ausgeführt ist.

Durch die erfindungsgemäße piezoelektrische Bewegungseinrichtung und insbesondere dadurch, dass die Endbereiche jeweils wenigstens zwei piezoelektrische Körper umfassen, die miteinander über Kontaktflächen verbunden sind, kann eine viel größere Kraft auf den Bewegungskörper ausgeübt werden, da durch eine Art Zweielement-Piezokörper, der in der Literatur "Bimorph" genannt wird, eine größere Auslenkung in Richtung des Bewegungskörpers erzielbar ist. Hierdurch erhöht sich insbesondere der Einsatzbereich der piezoelektrischen Bewegungseinrichtung auch zu tiefen Temperaturen hin, da die Verringerung des piezoelektrischen Koeffizienten zu tiefen Temperaturen durch den stärkeren Verbiegungseffekt und dadurch die stärkere Kraftausübung auf den Bewegungskörper mehr als kompensiert werden kann.

Unter dem Begriff Piezoeffekt wird im Rahmen der Erfindung insbesondere auch der Effekt der Elektrostriktion, also der dem Piezoeffekt entgegengesetzte Effekt verstanden. Eine piezoelektrische Bewegungseinrichtung ist somit insbesondere auch eine Bewegungseinrichtung, die aufgrund von Bewegungen von piezoelektrischen Kristallen bzw. einem piezoelektrischen Material aufgrund des Anlegens elektrischen Potentials oder einer Spannung geschieht.

Im Rahmen der Erfindung ist die Längsachse insbesondere entlang der längsten Ausdehnung der piezoelektrischen Vorrichtung ausgerichtet. Diese muss nicht notwendigerweise im Mittelpunkt der Ebene angeordnet sein, die quer zur Längsachse die piezoelektrische Vorrichtung schneidet, sondern kann auch beispielsweise auf einer Mantelfläche einer Piezoröhre angeordnet sein, die Bestandteil der piezoelektrischen Vorrichtung sein kann. Die Längsachse kann auch eine Symmetrieachse sein.

Dadurch, dass die Normalen der Kontaktflächen im Wesentlichen parallel zur Richtung der ausgeübten Kraft angeordnet sind, ergibt sich ein klassischer Zweielement-Körper bzw. ein Bimorph. Dieses kann als eine Art Sandwich verstanden werden, wobei zwischen den beiden Piezokörpern ein Klebstoff vorgesehen sein kann.

Erfindungsgemäß ist zwischen den zwei piezoelektrischen Körpern der Endbereiche eine Elektrode angeordnet. Es sind ferner vorzugsweise auf den entgegen gesetzten Seiten der piezoelektrischen Körper, also den Flächen, die parallel zu der Kontaktfläche sind, Elektroden angeordnet.

Eine besonders bevorzugte Ausführungsform, die eigenständigen erfinderischen Charakter hat, liegt dann vor, wenn an wenigstens einem piezoelektrischen Körper eines Endbereichs an der Oberfläche, die benachbart zum Bewegungskörper angeordnet ist, ein Zwischenkörper aus einem anderen Material als der piezoelektrische Körper vorgesehen ist. Dieses andere Material kann beispielsweise abriebfest sein und/oder eine geringe Reibung zum Bewegungskörper aufweisen, so dass beim Kontakt des Zwischenkörpers zum Bewegungskörper anstelle eines Kontaktes eines Piezomaterials zum Bewegungskörper ein deutlich geringerer Verschleiß an der Grenzfläche zwischen dem Bewegungskörper und dem Zwischenkörper entsteht. Hierdurch kann die Lebensdauer der piezoelektrischen Bewegungseinrichtung deutlich erhöht werden.

Vorzugsweise ist der Zwischenkörper mit einem piezoelektrischen Körper verbunden und insbesondere vorzugsweise verklebt.

Eine besonders elegante Lösung der Aufgabe liegt dann vor, wenn das Lager Teil der piezoelektrischen Vorrichtung ist. Dieses kann beispielsweise dann gegeben sein, wenn die piezoelektrische Vorrichtung eine piezoelektrische Röhre umfasst oder zwei parallele piezoelektrische Stäbe, die durch ein weiteres Material oder piezoelektrisches Material an den jeweiligen längsaxialen Seitenflächen verbunden sind, vorgesehen ist, und der Bewegungskörper innerhalb einer derartigen piezoelektrischen Vorrichtung angeordnet ist. Vorzugsweise ist die piezoelektrische Vorrichtung ein langer, an den Endbereichen offener Hohlkörper. Insbesondere vorzugsweise ist der Hohlkörper eine, insbesondere zylindrische, Röhre.

Äußerst effizient wird die Aufgabe dadurch gelöst, dass die piezoelektrische Vorrichtung in den Endbereichen längsaxial geschlitzt ausgeführt ist. Durch Vorsehen von Schlitzen in den Endbereichen, insbesondere im Fall eines Hohlkörpers, kann die stärkere Auslenkung der Zweischicht-Piezokörper sehr gut auf den Bewegungskörper übertragen werden, so dass eine entsprechend große Haltekraft ermöglicht ist. Das Vorsehen von Schlitzen im Endbereich eines Hohlkörpers bzw. einer Röhre hat auch eigenständigen erfinderischen Charakter.

Die Aufgabe wird ferner durch eine piezoelektrische Bewegungseinrichtung gelöst, wobei eine piezoelektrische Vorrichtung vorgesehen ist, die einen Mittelbereich und zwei Endbereiche aufweist und einen Bewegungskörper, der auf oder in einem Lager oder der piezoelektrischen Vorrichtung gelagert ist, wobei ein Endbereich ausgestaltet ist oder beide Endbereiche ausgestaltet sind, um eine Kraft in Richtung des Bewegungskörpers, insbesondere queraxial zu einer Längsachse der piezoelektrischen Vorrichtung, auf den Bewegungskörper auszuüben, wobei der Mittelbereich der piezoelektrischen Vorrichtung wenigstens eine Elektrode aufweist, die schräg zur Längsachse der piezoelektrischen Vorrichtung angeordnet ist.

Durch Vorsehen einer derartigen schräg angeordneten Elektrode im Mittelbereich ist es erstmalig möglich, mit einer entsprechenden piezoelektrischen Bewegungseinrichtung eine rotative Bewegung des Bewegungskörpers und auch eine translatorische Bewegung des Bewegungskörpers zu erreichen. Schräg zur Längsachse angeordnet bedeutet im Rahmen der Erfindung insbesondere in einem Winkel zur Längsachse vorzugsweise zwischen 10° und 80°, insbesondere vorzugsweise im Bereich von 30° bis 60° und weiterhin insbesondere vorzugsweise im Bereich von ca. 45°.

Die Winkel hängen von der Länge des Mittelbereichs längsaxial zur Längsachse ab und der Breite quer hierzu bzw. im Falle einer Röhre der Mantelbreite, die, sofern diese abgerollt wäre, auch queraxial zur Längsachse angeordnet wäre. Der Winkel hängt ferner naturgemäß auch davon ab, wie viele schräg angeordnete Elektroden quer zur Längsachse des Mittelbereiches bzw. der piezoelektrischen Vorrichtung angeordnet sind und wie groß die Breite der Elektrode ist und ob die Breite entlang der schrägen Anordnung gleich bleibend ist oder sich vergrößert oder verkleinert.

Vorzugsweise sind mehrere Elektroden schräg zur Längsachse der piezoelektrischen Vorrichtung angeordnet, wobei diese in längsaxialer Richtung hintereinander oder im Wesentlichen senkrecht hierzu nebeneinander angeordnet sind. Im Wesentlichen senkrecht hierzu nebeneinander bedeutet im Rahmen der Erfindung insbesondere auch radial nebeneinander. Für den Fall, dass die piezoelektrische Vorrichtung einen Piezokörper aufweist, der in Form eines Stabes vorliegt, beispielsweise eines quaderförmigen Stabes, können so mehrere Elektroden im Wesentlichen senkrecht zu Längsachse nebeneinander angeordnet sein. In einem Fall, in dem die piezoelektrische Vorrichtung einen Hohlkörper als piezoelektrischen Körper umfasst, ist mit im Wesentlichen senkrecht zur Längsachse gemeint, dass diese auf der Mantelfläche, so diese abgerollt ist, im Wesentlichen senkrecht zur Längsachse nebeneinander angeordnet sind. Es ist auch eine Ausgestaltung denkbar, bei der die Elektroden wendelförmig bzw. spiralförmig nebeneinander angeordnet sind.

Vorzugsweise ist der Bewegungskörper drehbar gelagert. Besonders bevorzugt ist die piezoelektrische Bewegungseinrichtung dann, wenn wenigstens eine Elektrode wenigstens abschnittsweise spiralförmig ist. Vorzugsweise sind jeweils Paare von schräg angeordneten Elektroden vorgesehen, die unterschiedlich zueinander ausgerichtet sind, beispielsweise entgegengesetzt relativ zur Längsachse der piezoelektrischen Vorrichtung oder zueinander verkippt. Vorzugsweise sind wenigstens zwei Elektroden um eine Ebene, die die Längsachse und eine gemeinsame Grenzlinie umfasst, spiegelsymmetrisch angeordnet. In diesem Fall kann sehr einfach eine gleichförmige translatorische Bewegung des Bewegungskörpers erzielt werden aber auch eine gleichmäßige bzw. gleichweite Links- oder Rechtsdrehung erfolgen. Besonders einfach und elegant ist die piezoelektrische Bewegungseinrichtung dann, wenn der piezoelektrische Körper des Mittelbereichs einstückig mit einem piezoelektrischen Körper eines Endbereiches ist.

Die piezoelektrische Bewegungseinrichtung, die vorstehend beschrieben wurde, wird vorzugsweise zur Erzeugung einer translatorischen und/oder rotatorischen Bewegung des Bewegungskörpers verwendet.

Es ist ferner erfindungsgemäß ein Verfahren zur Manipulation eines Bewegungskörpers in oder an einer piezoelektrischen Bewegungseinrichtung, die vorstehend beschrieben wurde, angegeben, wobei zur längsaxialen Ausdehnung oder Verkürzung des Mittelbereiches der piezoelektrischen Vorrichtung an die Elektroden des Mittelbereichs gleichgesinnte elektrische Potentiale bzw. Spannungen angelegt werden. Hierdurch kann sich eine Translation des Bewegungskörpers ergeben, wobei dieses dargestellte Verfahrensschritt den Verfahrensschritten, die vorstehend beschrieben wurden, entsprechen, bei dem der Mittelbereich längsaxial ausgedehnt oder verkürzt wurde. Es können somit die an sich vom Inchworm aus den genannten US-Schriften bekannten Verfahrensschritte zur Vervollständigung des Verfahrens zur Manipulation eines Bewegungskörpers angewendet werden.

Die Aufgabe wird ferner durch ein Verfahren zur Manipulation eines Bewegungskörpers in oder an einer piezoelektrischen Bewegungseinrichtung, die vorstehend beschrieben wurde, gelöst, wobei zur Rotation des Bewegungskörpers die im Mittelbereich der piezoelektrischen Vorrichtung relativ zur Längsachse quer oder im Wesentlichen senkrecht hierzu bzw. radial nebeneinander angeordnete Elektroden mit örtlich alternierenden elektrischen Potentialen versorgt werden.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen:

Fig. 1        eine schematische Seitenansicht einer piezoelektrischen Bewegungseinrichtung gemäß dem Stand der Technik zur Erklärung des Klemm-mechanismus des Inchworm gemäß US 3,902,084 A bzw. US 3,902,085 A,

Fig.2         eine schematische Seitenansicht einer erfindungsgemäßen piezoelektrischen Bewegungseinrichtung zur Erklärung des Klemmmechanismus,

Fig. 3        einen Teil einer piezoelektrischen Bewegungseinrichtung gemäß Fig. 2 in einer schematischen Schnittdarstellung,

Fig. 4        eine schematische Schnittdarstellung einer erfindungsgemäßen piezoelektrischen Bewegungseinrichtung in einer anderen Ausführungsform,

Fig. 5        schematisch die piezoelektrische Bewegungseinrichtung gemäß Fig. 4 in Klemmposition,

Fig. 6        eine schematische Draufsicht eines Teils der piezoelektrischen Bewegungseinrichtung aus den Figuren 4 und 5,

Fig. 7        eine erfindungsgemäße piezoelektrische Bewegungseinrichtung in schematischer Schnittdarstellung in einer weiteren Ausführungsform,

Fig. 8        den Ausschnitt A1 aus Fig. 7 in schematischer Darstellung

Fig. 9        eine schematische Schnittdarstellung einer weiteren erfindungsgemäßen piezoelektrischen Bewegungseinrichtung,

Fig. 10       eine schematische Darstellung des Ausschnitts A2 aus Fig. 9,

Fig. 11       eine schematische dreidimensionale Darstellung eines Teils einer weiteren erfindungsgemäßen piezoelektrischen Bewegungseinrichtung,

Fig. 12       eine schematische Darstellung der Abrollung eines Teils der piezoelektrischen Bewegungseinrichtung gemäß Fig. 11 in einer Ebene,

Fig. 13 a) - d)   Spannungs-über-Zeit Diagramme der an Elektroden angelegten Spannungen U, und

Fig. 14       eine weitere in die Zeichenebene abgerollte Mantelfläche eines Teils einer weiteren piezoelektrischen Bewegungseinrichtung gemäß einer weiteren erfindungsgemäßen Ausführungsform.

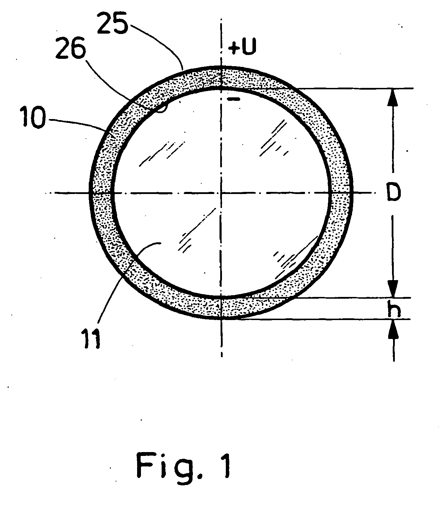

Fig. 1 zeigt eine schematische Seitenansicht einer bekannten piezoelektrischen Bewegungseinrichtung gemäß der US 3,902,084 A bzw. US 3,902,085 A. Fig. 1 dient zur Erläuterung des Klemmmechanismus des in diesen Dokumenten beschriebenen so genannten Inchworm bei der piezoelektrischen Bewegungseinrichtung gemäß dem Stand der Technik. Der Innendurchmesser der Piezoröhre 10 ist mit D dargestellt. Die Piezoröhre 10 hat eine Dicke bzw. Höhe h des Piezomaterials. Es ist eine erste Elektrode 25 im Außenmantelbereich dargestellt und eine zweite Elektrode 26 im Innenmantelbereich. Außerdem ist in Fig. 1 schematisch der Bewegungskörper 11 in Form eines zylindrischen Schaftes dargestellt. Wird nun eine Spannung U zwischen der ersten Elektrode 25 und der zweiten Elektrode 26 angelegt, verändert sich die der Innendurchmesser D gemäß der folgenden Formel

$$\Delta D = d_{31} U \frac{D}{h} \qquad\qquad (1)$$

Bei Verwendung eines weichen Piezomaterials, beispielsweise PZT (Bleizirkonattitanat; Bleizirkonat; Bleititanat), beispielsweise PZT-5H, das einen großen piezoelektrischen Quotienten $d_{31}$ bei Raumtemperatur von ungefähr 2,7 x $10^{-8}$ cm/V aufweist, und bei einer relativen hohen elektrischen Feldintensität von 4kV/cm würde die Änderung des Durchmessers

$$\Delta D = 1.1x10^{-4} D \qquad\qquad (2)$$

betragen. Das Piezomaterial PZT-5H oder andere Piezomaterialien sind beispielsweise in Chen, C.J., Introduction to Scanning Tunneling Microscopy, Chapter 9 und Appendix F, Oxford Univ. Press 1993, offenbart.

Für eine Piezoröhre mit einem Durchmesser von 1 cm würde die Änderung des Durchmessers 1 $\mu$m bedeuten und somit eine Auslenkung der Piezoröhre zum Bewegungskörper 11 hin von 0,5 $\mu$m. Dieses erfordert also beim Stand der Technik eine sehr hohe Genauigkeit bei der Herstellung und entsprechend niedrige Toleranzen. Derart niedrige Toleranzen sind notwendig, um ein effektives Klemmen des Bewegungskörpers zu ermöglichen. Die Toleranzen müssen deutlich kleiner als 1 $\mu$m sein. Aufgrund dieser geringen Ausdehnung kann ein Inchworm auch nur schwer bei tiefen Temperaturen Verwendung finden. Zum einen ist der thermische Ausdehnungskoeffizient bei einem typischen piezokeramischen Material bei 5 x $10^{-6}$ /K. Das heißt, dass bei einer Temperaturänderung von 260 K eine Durchmesseränderung von

$$\Delta D = 1.3 x 10^{-3} D \qquad (3)$$

erfolgen würde. Sofern also die Differenz der thermischen Ausdehnungsköeffizienten der Piezoröhre 10 und des Bewegungskörpers 11 mehr als 10 % betragen würde, könnte der Klemm-mechanismus nicht mehr korrekt funktionieren. Außerdem sind die piezoelektrischen Koeffizienten der Piezokeramiken bei niedrigen Temperaturen deutlich verringert. Für das Material PZT-5H reduziert sich der piezoelektrische Koeffizient auf $0,5 \times 10^{-8}$ cmN bei 260 K unter Raumtemperatur. Dies ist 1/5 des Wertes bei Raumtemperatur. Hierdurch ergibt sich eine Reduzierung der Änderung des Durchmessers wie folgt

$$\Delta D = 2 x 10^{-5} D \qquad (4)$$

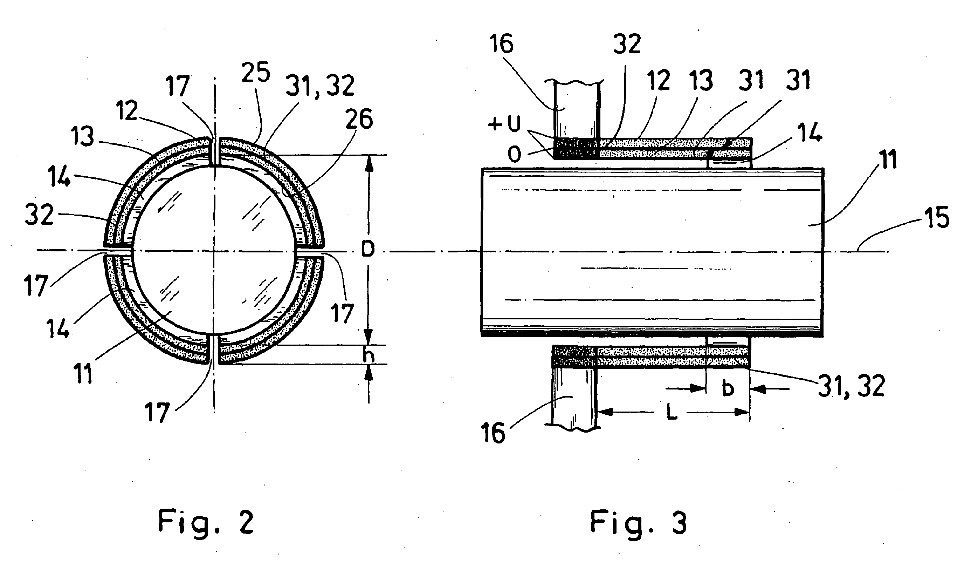

Sofern also der thermische Ausdehnungskoeffizient des Bewegungskörpers 11 und des Piezomaterials der Piezoröhre 10 mehr als 2 % beträgt, ist der Klemmmechanismus des Inchworm nicht mehr gewährleistet. Außerdem entsteht ein relativ hoher Abrieb des piezoelektrischen Material aufgrund der Reibung mit dem Bewegungskörper 11, so dass die Lebensdauer für den Inchworm seitens des Herstellers auf 2000 m beschränkt wird, was insbesondere bei Anwendungen im Weltraum oder bei Rastertunnelmikroskopen oder Rasterkraftmikroskopen zu einer deutlichen Beschränkung der Lebensdauer entsprechender Instrumente mit einem Inchworm führt. Außerdem ist die relativ geringe Kraftausübung, die der Inchworm auf den Bewegungskörper 11 ausübt, problematisch, da so der Bewegungskörper 11 nicht zu schwer sein darf. Demgegenüber ist der Klemmmechanismus, der gemäß der Erfindung vorgesehen ist, deutlich verlässlicher und auch bei tiefen Temperaturen ermöglicht. Zur Erläuterung wird insbesondere auf die Figuren 2 und 3 verwiesen.

Gemäß der Erfindung wird in dem Ausführungsbeispiel der Figuren 2 und 3 ein geschlitzter Zylinder bzw, eine geschlitzte Röhre verwendet, die im Bereich des Klemmens des Bewegungskörpers 11 ein piezoelektrisches Material aus zwei Schichten aufweist.

Fig. 2 zeigt eine schematische Seitenansicht eines erfindungsgemäßen Klemmmechanismus einer piezoelektrischen Vorrichtung. Fig. 3 zeigt eine schematische Schnittdarstellung der Ausführungsform gemäß Fig. 2 bzw. einen Teil einer erfindungsgemäßen piezoelektrischen Motors in einer Drehung um 90°.

Es ist erkennbar, dass anstelle einer einfachen Piezoröhre zum Klemmen eine doppelte Piezoröhre (bzw. eine Piezoröhre aus zwei Piezoschichten) mit einem Kragen 14 Verwendung findet, wobei die Zweischicht-Piezoröhre, die auch als Bimorph bezeichnet wird, eine äußere Piezoröhre 12 und eine innere Piezoröhre 13 umfasst, die miteinander verbunden sind, und zwar an einer Kontaktfläche 31. Tatsächlich ist in diesem Ausführungsbeispiel an den Kontaktflächen 31 der äußeren Piezoröhre 12 und der inneren Piezoröhre 13 eine Mittelelektrode 32 vorgesehen. Es sind außerdem eine äußere Elektrode 25 und eine innere Elektrode 26 vorgesehen.

Die Zweischicht-Piezoröhre ist an dem einen Ende mit einer Halterung 16 versehen, die eine Fixierung der Lage der Piezoröhre ermöglicht. Die Schlitze 17 können in einer Länge L wie dargestellt vorgesehen sein. Diese können allerdings auch kürzer oder länger sein. Es ist außerdem ein Kragen 14 vorgesehen, der aus einem anderen Material als einem piezoelektrischen Material besteht, um beispielsweise die Reibung mit dem Bewegungskörper 11 zu verringern. Es ist außerdem zur besseren Veranschaulichung eine Längsachse 15 dargestellt. Die Halterung 16 kann ein Haltering sein. Vorzugsweise ist die Piezoröhre entlang der Länge des Halterings nicht geschlitzt. Der Kragen 14 ist in einer Länge b ausgestaltet. Der Kragen 14 ist auch entsprechend geschlitzt.

Beide Piezoröhren 12 und 13 sind in der gleichen radialen Richtung gepolt. Diese werden allerdings mit elektrischen Feldern vorzugsweise in gleicher Größe, allerdings in entgegengesetzte Richtungen versetzt. Aus diesem Grund funktioniert die Zweischicht-Piezoröhre bzw. funktioniert die Ausführungsform gemäß Fig. 2 und Fig. 3 wie ein Bimorph. Es sind auch Piezoröhren 12, 13 denkbar, die entgegengesetzt elektrisch polarisiert sind und an die die gleiche Spannung von der Richtung der elektrischen Felder her angelegt wird.

Unter der Annahme, dass die Breite des Kragens b deutlich kleiner ist als die Länge der geschlitzten Piezoröhre, kann die radiale Auslenkung der Piezoröhre und damit die radiale Auslenkung des Kragens 14 wie folgt dargestellt werden:

$$\Delta D = 3 d_{31} U \frac{L^2}{h^2} \qquad (5)$$

wobei L die Länge des geschlitzten Teils der Piezoröhre ist und h die Dicke der ineinander liegenden Piezoröhren 12, 13 bzw. die Dicke der Zweischicht-Piezoröhre.

Da die radiale Auslenkung proportional zum Quadrat von L/h ist, kann diese eine Größenordnung größer als bei einer Piezoröhre gemäß dem Stand der Technik sein. Aus diesem Grund können sogar harte piezoelektrische Keramiken Verwendung finden, die üblicherweise einen geringeren piezoelektrischen Koeffizienten aufweisen, beispielsweise EBL PZT-8 mit einem $d_{31}$ von $\approx$ 1,0 x 10$^{-8}$ cm/V. Bei Anwendung von 400 V und den Dimensionen L = 1 cm, h = 0,075 cm ergibt sich eine radiale Auslenkung von $\Delta D \approx 21 \mu m$.

Dieses ist ungefähr 40-mal so groß wie beim Klemmmechanismus des Inchworm. Bei der Temperatur von flüssigem Helium (4,2 K) ist der piezoelektrische Koeffizient von PZT-8 um den Faktor 2 reduziert. Die radiale Auslenkung verbleibt trotz allem bei ungefähr 10 $\mu$m, also ein Faktor von 20 größer als bei dem Klemmmechanismus des Inchworm bei einem weichen piezoelektrischen Material, also bei einem Material, das an sich einen größeren piezoelektrischen Koeffizienten aufweist.

Die Vergrößerung der radialen Auslenkung zum Klemmen löst auch das möglicherweise vorhandene Problem im Hinblick auf die unterschiedlichen Wärmeausdehnungskoeffizienten. Der Wärmeausdehnungskoeffizient von PZT-8 liegt bei 3 bis 4 x 10$^{-6}$ /K und das von Aluminimumoxid (alumina), das ein bevorzugtes Material für den Bewegungskörper 11 ist, beträgt ungefähr 2 x 10$^{-6}$ /K. Die Differenz ist < 2 x 10$^{-6}$ / K. Für eine Röhre mit einem Durchmesser von 1 cm wäre somit die Durchmesseränderung in einem Bereich von 0°K bis 300°K weniger als 6 $\mu$m, so dass die radiale Auslenkung sich weniger als 3 $\mu$m ändert. Dieses ist deutlich geringer als die radiale Auslenkung des Klemmkragens 14 durch die Piezoröhren 12 und 13 von 10 $\mu$m.

Damit ist auch der Effekt des Verschleißes deutlich reduziert. Bei einem Verschleiß bzw. Abrieb von 0,5 $\mu$m würde bei den obigen Beispielen der Inchworm nicht mehr funktionieren. Ein derartiger Abrieb hätte allerdings auf die erfindungsgemäße Vorrichtung im Hinblick auf das Klemmen des Bewegungskörpers 11 im Wesentlichen keine Auswirkung. Außerdem kann beispielsweise ein Saphir oder $Al_2O_3$ oder allgemein Aluminiumoxid (alumina) als Bewegungskörper 11 Verwendung finden und auch als Kragen 14, so dass sich der Abrieb noch deutlicher verringert.

Da ferner die radiale Auslenkung zum Klemmen gemäß der Erfindung deutlich größer ist, ist es außerdem möglich, den Kragen immer in Kontakt mit dem Schaft bzw. dem Bewegungskörper 11 zu halten, und zwar auch ohne Anlegen einer Spannung. Auch auf diese Weise sollte die erfindungsgemäße Vorrichtung noch ordnungsgemäß funktionieren. Beispielsweise könnte der innere Durchmesser des Kragens 14 im spannungslosen Zustand ein klein wenig kleiner sein als der äußere Durchmesser des Bewegungskörpers 11 und ein Öffnen nur durch Anlegen einer entsprechenden Spannung ermöglicht sein. Die entgegen gesetzte Spannung würde dann zu einer Verstärkung des Drucks des Kragens 14 auf den Bewegungskörper 11 führen.

In dem Ausführungsbeispiel gemäß Fig. 2 ist eine Sektorierung in vier Sektoren, d.h. ein Schlitzen der Röhre bzw. Röhren mit vier Schlitzen 17 vorgesehen. Der Härtegrad einer derartigen Ausführungsform ist größer als der Härtegrad in einer Ausführungsform mit beispielsweise sechs Schlitzen aber kleiner als mit beispielsweise drei Schlitzen. Für PZT-8 mit einem Young Modul von 8,7 x 10$^6$ N/cm$^2$ mit einem Klemmmechanismus, der einen Radius von 0,65 cm aufweist, einer Dicke des Zweischicht-Piezokörpers (Dicke der äußeren Piezoröhre 12 zzgl. Dicke der inneren Piezoröhre 13 und ggf. zzgl. der Dicke der Zwischenschicht in Form der Mittelelektrode 32 und etwaigem Klebstoff) von 0,075 cm und einer Länge L von 1 cm wäre die Härte $K \approx 2{,}57 \dfrac{N}{m}.$

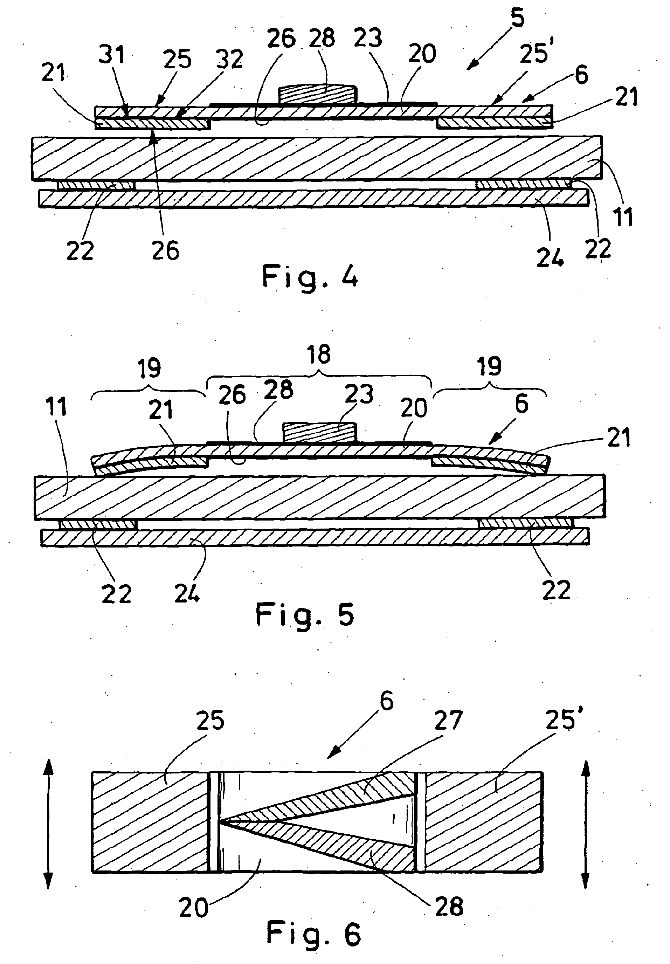

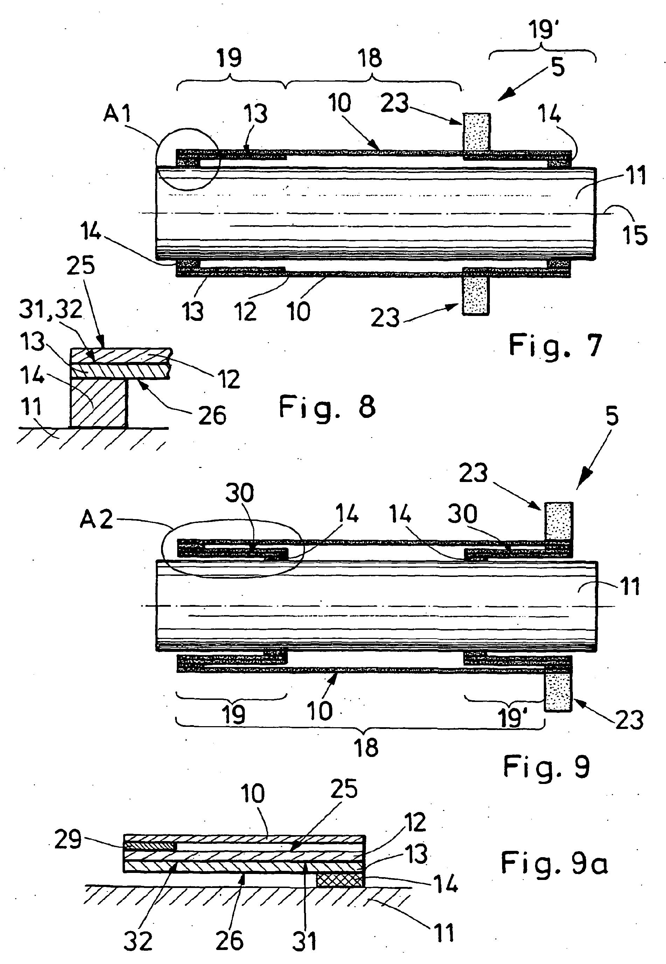

Bei einer Temperatur von Flüssig-Helium ist die radiale Auslenkung 10 $\mu$m. Aus diesem Grund ist die Kraft, die angewendet werden kann, 25 N. Der Reibungskoeffizient von Saphir auf Saphir ist 0,2. Aus diesem Grund beträgt die Haltekraft 5N. Da zwei Klemmvorrichtungen in der erfindungsgemäßen Vorrichtung beispielsweise gemäß Fig. 4 bis 7 und auch gem. Figuren 7, 9 und 11 vorgesehen sind, kann die Vorrichtung ungefähr 1 kg an Gewicht halten oder heben. Die Härte des Inchworm ist zwar etwas größer, nämlich typischerweise bei 10 N/$\mu$m, die Härte der piezoelektrischen Vorrichtung gemäß der Erfindung ist allerdings größer als die meisten ähnlichen Vorrichtungen und auf jeden Fall ausreichend für Anwendungen beim Rastertunnelmikroskop und Rasterkraftmikroskop als auch bei extraterrestrischen Anwendungen.

Fig. 4 zeigt eine der Erfindung anspruchliegende Ausführungsform eines piezoelektrischen Motors in einer schematischen Schnittdarstellung, wobei zur besseren Veranschaulichung zwischen der piezoelektrischen Vorrichtung 6 umfassend den Piezostab 20 und den beiden inneren Piezokörpern 12 und dem Bewegungskörper 11 ein Abstand dargestellt ist. Es ist eine Darstellung gewählt worden, bei der keine elektrische Spannung an die Piezoelemente angelegt ist. Der Bewegungskörper 11 lagert auf zwei Lagern 22, die mit einer Bodenplatte 24 verbunden sind. Fig. 5 zeigt eine entsprechende schematische Schnittdarstellung gemäß Fig. 4, wobei allerdings an beiden Enden der piezoelektrischen Vorrichtung 6 eine elektrische Spannung angelegt ist, so dass eine Verbiegung der Endbereiche 19 erfolgt. Im Mittelbereich 18 ist die piezoelektrische Vorrichtung 6 mit einem Halter 23 fixiert. Eine längsaxiale Bewegung des Bewegungskörpers 11 in dem Zeichenblatt der Fig. 4 und der Fig. 5 nach links oder nach rechts kann auf übliche Art und Weise geschehen wie bei einem Inchworm. Die Verbiegung der Endbereiche 19 aufgrund des Anlegens von Spannung ist grundsätzlich sehr schön in der Veröffentlichung Chen, C.J., Introduction to Scanning Tunneling Microscopy, Oxford University Press, 1993, Seite 223, 224, dargestellt.

Fig. 6 zeigt eine schematische Draufsicht auf die piezoelektrische Vorrichtung 6 aus den Figuren 4 und 5. Es sind insbesondere die beiden ersten Elektroden 25 und 25' dargestellt, die zum Verklemmen des Bewegungskörpers 11 bzw. zum Freilassen des Bewegungskörpers 11 dienen. Es sind außerdem eine erste Schrägelektrode 27 und eine zweite Schrägelektrode 28 dargestellt, die im Mittelbereich des Piezostabes 20 angeordnet sind. Der Piezostab 20 kann wie in diesem Beispiel ausgeführt ist, vollumfänglich aus einem piezoelektrischen Material sein und außerdem einstückig, wie in den Beispielen der Figuren 4 bis 6 dargestellt. Der Piezostab kann allerdings auch aus mehreren piezoelektrischen Körpern bzw. Körperteilen oder -stücken bestehen bzw. diese aufweisen, die aneinander geklebt sind bzw. auf andere Art und Weise miteinander verbunden sind. Schließlich kann zwischen den piezoelektrischen Körpern ein anderes Material angewendet sein, das den Piezoeffekt nicht zeigt. Außerdem kann der Piezostab 20 in dem Bereich, der nicht durch eine Elektrode bedeckt ist, auch aus einem anderen Material hergestellt sein.

Die Schrägelektroden 27 und 28 sind spiegelsymmetrisch zu der Längsachse des Piezostabs 20 angeordnet. Wenn nun eine Spannung an die erste Schrägelektrode 27 und die zweite Schrägelektrode 28 angelegt wird, die gleichgerichtet ist, würde sich das Piezomaterial, das im Bereich der Elektroden 27 und 28 angeordnet ist, gleichförmig ausdehnen oder zusammenziehen, so dass eine lineare Bewegung des Bewegungskörpers 11 ermöglicht ist, und zwar durch ein ähnliches Verfahren wie beim Inchworm.

Durch Verwendung der Schrägelektroden 27 und 28 kann allerdings auch eine Rotation des Bewegungskörpers 11 vorgenommen werden, sofern dieser drehbar im Lager 22 gelagert ist. Hierzu müssen derartige elektrische Spannungen an die Elektroden 27 und 28 angelegt werden, dass sich das Piezomaterial im Bereich der ersten Schrägelektrode 27 zusammenzieht bzw. ausdehnt und im Bereich der zweiten Schrägelektrode entsprechend andersherum ausdehnt oder zusammenzieht. Hierdurch würde bei Fixierung des Piezostabs 20 an den Halter 23 es zu einer Bewegung entsprechend der in Fig. 6 schematisch angedeuteten Pfeile der Endstücke 19 des Piezostabs 20 kommen. In Fig. 6 ist zur besseren Veranschaulichung der Halter 23 nicht eingezeichnet.

Durch das Anlegen eine entgegengesetzt gerichteten Spannung ist es möglich, den Bewegungskörper 11 in eine Drehbewegung zu versetzen. Es ist somit möglich, mit der piezoelektrischen Vorrichtung 6 bzw. dem piezoelektrischen Motor 5 eine Linearbewegung und eine Rotationsbewegung des Bewegungskörpers 11 vorzusehen. Der erfindungsgemäße Motor 5 integriert somit in einer einzigen kompakten Bauform eine Linear- und eine Rotationsbewegung.

Eine elegantere und stabilere erfindungsgemäße Ausführungsform ist in den Figuren 7, 9 und 11 dargestellt. In diesen Figuren sind rotationssymmetrische piezoelektrische Vorrichtungen 6 dargestellt, die einen rotationssymmetrischen Bewegungskörper 11 sowohl translatorisch als auch drehend bewegen können.

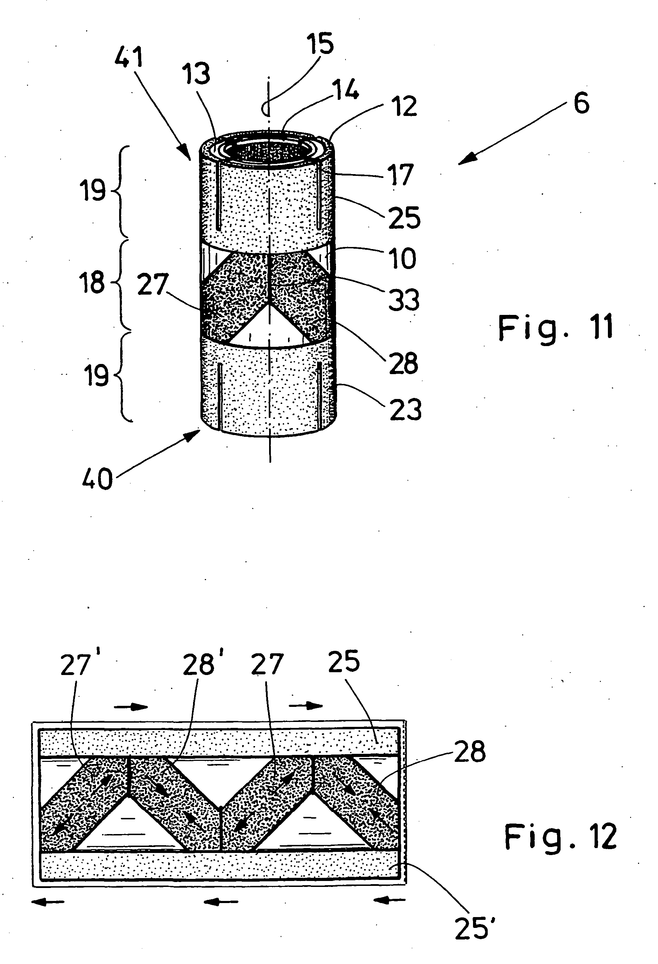

Fig. 7 zeigt eine schematische Schnittdarstellung einer erfindungsgemäßen Ausführungsform eines piezoelektrischen Motors 5. Es ist eine Piezoröhre 10 vorgesehen, die einen Mittelbereich 18 der piezoelektrischen Vorrichtung 6 aufweist und sich in die Endbereiche 19 hinein erstreckt. Im Endbereich 19 der Piezoröhre 10 ist eine innere Piezoröhre 13 angeordnet und außerdem ein Kragen 14. Die Piezoröhre 10 und die innere Piezoröhre 13 sind im Endbereich 19 mit Schlitzen ausgeführt, die nicht dargestellt sind, allerdings entsprechend beispielsweise der Fig. 11 oder der Fig. 2, wobei anstelle von vier Schlitzen auch drei Schlitze, zwei Schlitze, fünf Schlitze oder mehr Schlitze vorgesehen sein können.

Bei der Beschreibung dieses Ausführungsbeispiels soll von vier Schlitzen ausgegangen werden. Der Halter 23 ist nicht zentral auf der Piezoröhre 10 angeordnet sondern im Anfangsbereich eines Endbereichs der einen Seite. Der Halter 23 kann allerdings auch an einer anderen Stelle angebracht sein. In Fig. 8 ist zur besseren Veranschaulichung der Ausschnitt A1 aus Fig. 7 schematisch dargestellt. Es sind dort insbesondere auch die Kontaktflächen 31 dargestellt. Es kann wie im Ausführungsbeispiel der Fig. 3 auch eine entsprechende Anordnung der Elektroden vorgesehen sein, also eine Mittelelektrode 32 im Bereich der Kontaktflächen 31 und eine äußere Elektrode 25 und eine innere Elektrode 26, wobei die Polarisation des piezoelektrischen Materials der Piezoröhre 10 und der inneren Piezoröhre 13 gleich ausgerichtet ist. Es wird dann eine entgegengesetzte Polarität an die Elektroden angelegt, um ein Verbiegen der Zweischicht-Körper umfassend die Körper 12 und 13 zu erzielen. Es kann allerdings auch eine entgegen gesetzte Polarisation des piezoelektrischen Materials vorgesehen sein und eine gleichgerichtete Spannung angelegt werden, um diesen Effekt zu erzielen. Es kann auch eine Ausführungsform denkbar sein, bei der keine Mittelelektrode Verwendung findet sondern lediglich eine Innenelektrode. In diesem Fall sollte die Polarisation des piezoelektrischen Materials in der äußeren Piezoröhre und der inneren Piezoröhre wenigstens teilweise entgegen gesetzt sein.

In diesem Ausführungsbeispiel wird beispielsweise ein elektrisches Potential von +U an die äußere Elektrode 25 und die innere Elektrode 26 angelegt und von 0 an die mittlere Elektrode 32.

Die erfindungsgemäßen Vorrichtungen haben den Vorteil, dass beide Endbereiche einen Druck auf den Bewegungskörper 11 ausüben können, allerdings eine Seite einen größeren Druck als die andere Seite, so dass bei einer Längenänderung des mittleren Bereichs der Piezoröhre 10 oder bei einer Verdrehung dieses mittleren Bereichs die Seite des Bewegungskörpers 11 durch die Klemmung durchrutscht, an der eine geringere Kraft bzw. ein geringerer Druck ausgeübt wird. Hierdurch ist eine sehr genaue und verlässliche Bewegung des Bewegungskörpers 11 ermöglicht.

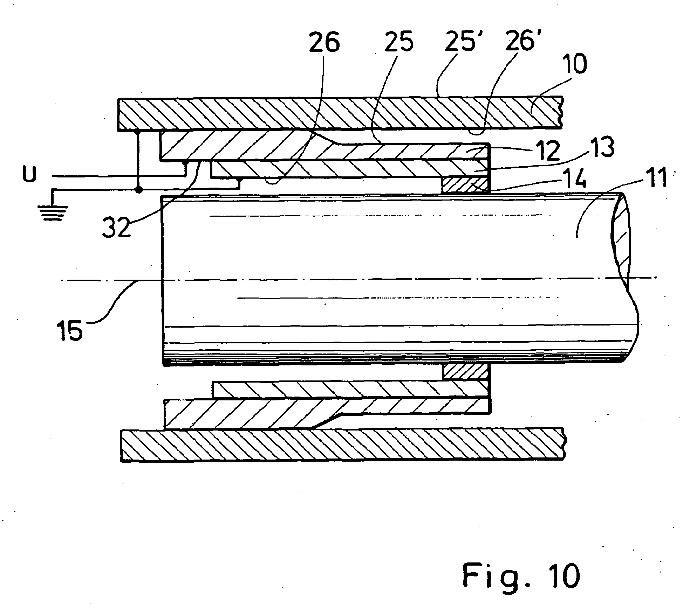

Fig. 9 zeigt eine etwas andere erfindungsgemäße Ausführungsform eines piezoelektrischen Motors 5 in schematischer Schnittdarstellung, wobei die Piezoröhre 10 ausschließlich zur transversalen oder Rotationsbewegung des Bewegungskörpers 11 beitragen kann, da der Teil der piezoelektrischen Vorrichtung 6, der für die Verklemmung des Bewegungskörpers 11 vorgesehen ist, innerhalb der Piezoröhre 10 mit einem Abstandshalter bzw. einem Verbindungsstück 29 an der Piezoröhre 10 angebracht ist. Fig. 10 zeigt den Ausschnitt A2 aus Fig. 9 in schematischer Schnittdarstellung zur besseren Veranschaulichung. Es können über die gesamte Piezoröhre 10 Elektroden vorgesehen sein, die für eine Drehbewegung und/oder eine translatorische Bewegung sorgen. Der Halter 23 kann auch an anderer Stelle, beispielsweise in der Mitte der Piezoröhre 10 angeordnet sein.

Die Ausführungsform gemäß Fig. 7 nutzt also eine lange Piezoröhre 10 für die Bewegung des Bewegungskörpers 11 und den äußeren Bereich dieser Röhre 10 für den Klemmmechanismus. Die beiden inneren Piezoröhren 13 werden auf die Innenseite der langen Piezoröhre 10 im Bereich der äußeren Piezoröhre 12 zusammen mit dem Kragen bzw. den Kragen 14 eingeklebt. Der Zweischicht-Körper, der die innere Piezoröhre 13 und die äußere Piezoröhre 12 umfasst, ist entsprechend wenigstens teilweise geschlitzt, und zwar längsaxial zur Längsachse 15. Es werden vorzugsweise drei oder vier Sektoren verwendet. Die Ausführungsform gemäß Fig. 9 benutzt zwei separate Bimorphs bzw. Zweischicht-Körper und eine lange Piezoröhre 10, die für die Bewegung zuständig ist. Unter Zweischicht-Körper wird im Rahmen der Erfindung ein Körper mit wenigstens zwei piezoelektrischen Schichten verstanden.

Die innere Piezoröhre 13 und die äußere Piezoröhre 12 werden üblicherweise vor Befestigung an der Piezoröhre 10 gemäß Fig. 9 zusammengeklebt. Außerdem werden auch die entsprechenden Schlitze vor dem Anbringen in der Piezoröhre 10 vorgenommen. Eine elektrische Kontaktierung der Elektroden der äußeren und der inneren Piezoröhre 12 und 13 kann über entsprechende Öffnungen geschehen, die vorzugsweise durch das Verbindungsstück 29 bzw. die Verbindungsstücke 29 und den Kragen 14 vorgesehen sind (beispielsweise durch die Schlitze hindurch).

In Fig. 11, die eine schematische dreidimensionale Darstellung einer weiteren Ausführungsform einer erfindungsgemäßen piezoelektrischen Vorrichtung 6 zur Verwendung für einen piezoelektrischen Motor 5 darstellt, dient zur Erläuterung der Rotationsbewegung bzw. auch zur Möglichkeit einer translatorischen Bewegung bei schräg angeordneten Elektroden im mittleren Bereich 18 der piezoelektrischen Vorrichtung 6. Der mittlere Bereich 18 kann sich bis in die Endbereiche 19 hinein erstrecken.

Wie in den vorherigen Beispielen sind geschlitzte Endbereiche 19 vorgesehen, die eine äußere Piezoröhre 12, eine innere Piezoröhre 13 und einen Kragen 14 aufweisen. Es ist auch die erste Elektrode 25 im oberen Bereich der Fig. 11 dargestellt und eine erste Elektrode 25' im unteren Bereich dargestellt. Die entsprechenden Gegenelektroden sind auch vorhanden und ferner jeweils eine Mittelelektrode. Diese sind allerdings in Fig. 11 der besseren Übersichtlichkeit wegen nicht mit Bezugszeichen versehen. Ferner ist auch der Bewegungskörper 11 nicht dargestellt. Der obere Endbereich 19 definiert eine obere Klemme 41 und der untere Endbereich 19 definiert eine untere Klemme 40. Im Mittelbereich 18 der Piezoröhre 10, die einstückig mit den äußeren Piezoröhren 12 ausgestaltet sein kann oder aber mit diesen verbunden sein kann, sind vier Schrägelektroden vorgesehen, von denen aufgrund der Darstellung in Fig. 11 nur zwei sichtbar sind, nämlich eine erste Schrägelektrode 27 und eine zweite Schrägelektrode 28. Zwischen den beiden Schrägelektroden 27 und 28 ist eine Grenzlinie 33 definiert, die die beiden Elektroden voneinander isoliert.

Fig. 12 ist eine Draufsicht auf einen Teil der piezoelektrischen Vorrichtung 6 aus Fig. 11 im abgerollten Zustand. Es ist ein Teil der oberen ersten Elektrode 25 und der unteren ersten Elektrode 25' dargestellt und es sind zwei erste Schrägelektroden 27 und 27' und zwei zweite Schrägelektroden 28 und 28' dargestellt.

In Fig. 12 ist die Funktionalität für die Rotationsbewegung besser verständlich. Die Schrägelektroden 27, 27', 28 und 28' sind spiralförmig, wie in Fig. 12 deutlich erkennbar ist. Die ersten Schrägelektroden 27 und 27' sind entgegengesetzt zu den zweiten Schrägelektroden 28 und, 28' orientiert. Die weiß gelassenen Flächen in Fig. 11 und 12 sind nicht mit Elektrodenmaterial versehen. Um eine Rotation zu erzeugen, werden Spannungen an die ersten Schrägelektroden 27, 27' und die zweiten Schrägelektroden 28, 28' angelegt, die entgegengesetzt sind, so dass die ersten Schrägelektroden sich beispielsweise ausdehnen, wie durch die Pfeile in Fig. 12 angedeutet ist, und die zweiten Schrägelektroden 28 und 28' sich zusammenziehen, wie auch durch die Pfeile entsprechend angedeutet ist. Hierdurch ergibt sich eine Bewegung des oberen Endbereichs bzw. der oberen Klemme 41 nach rechts in der Ebene der Fig. 12 und eine Bewegung der unteren Klemme 40 nach links, also eine Rotation der oberen und der unteren Klemme in Fig. 11.

Durch den erfindungsgemäßen piezoelektrischen Motor ist es selbst bei nicht extrem runden Bewegungskörpern 11 und entsprechend runden Piezoröhren möglich, eine Rotation des Bewegungskörpers 11 vorzusehen. Die radiale Auslenkung kann im Bereich von mehreren Zehntel μm sein, so dass auch eine schnelle Rotationsbewegung möglich ist. Da die Rotationsbewegung nicht wie im Stand der Technik üblich von Reibung und Impuls abhängt, ist auch eine hohe Stabilität und Verlässlichkeit sowie Genauigkeit möglich.

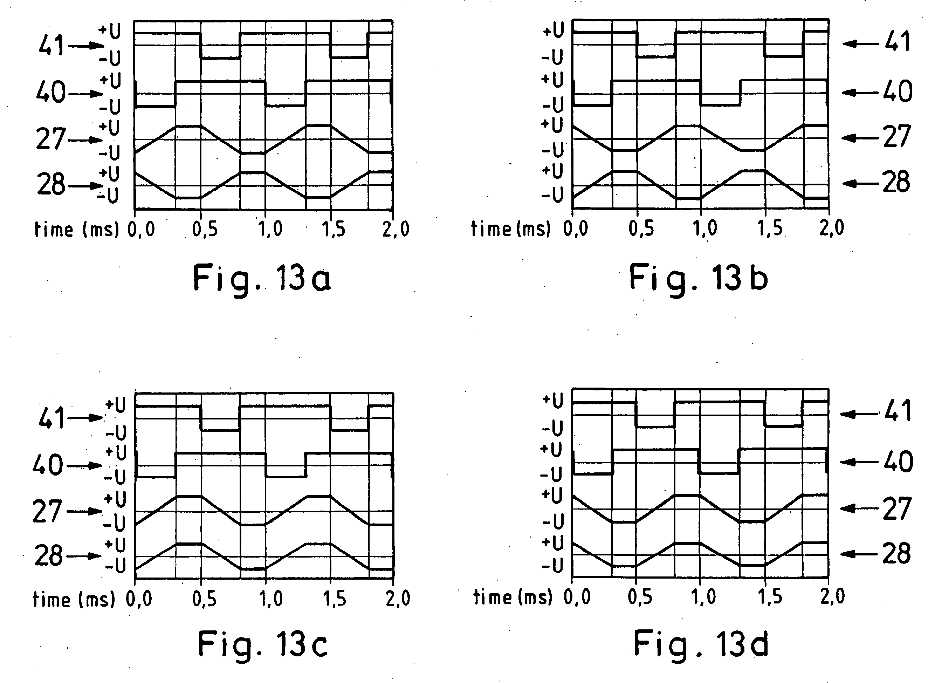

In Fig. 13 sind schematisch Spannungs-über-Zeit Diagramme dargestellt, die das Anlegen von Spannungen an die Klemmelektroden 25, 25' bzw. 26 angeben, und zwar unterteilt in den Elektroden der unteren Klemme 40 und der oberen Klemme 41. Außerdem sind die Spannungen angedeutet, die an die Schrägelektroden 27 bzw. 27' und 28 bzw. 28' angelegt werden. Mit der Spannungsfolge gemäß Fig. 13a ist eine Rotation im Uhrzeigersinn möglich mit einer Spannungsabfolge gemäß Fig. 13b eine Rotation entgegen dem Uhrzeigersinn. Mit einer Spannungsabfolge gemäß Fig. 13c ist beispielsweise die Annäherung einer Spitze eines Rastertunnelmikroskops an eine Probe ermöglicht und mit einer Spannungsabfolge gemäß Fig. 13d das Entfernen der Spitze von der Probe, also jeweils eine translatorische Bewegung.

Es ist auch möglich, eine Rotations- und Translationsbewegung mit jedem Schritt gleichzeitig zu erzeugen. Hierzu müssen die entgegengesetzt polarisierten Spannungen, die an die jeweils benachbarten und unterschiedlich angeordneten Schrägelektroden angelegt werden, vom Betrag her unterschiedlich groß sein.

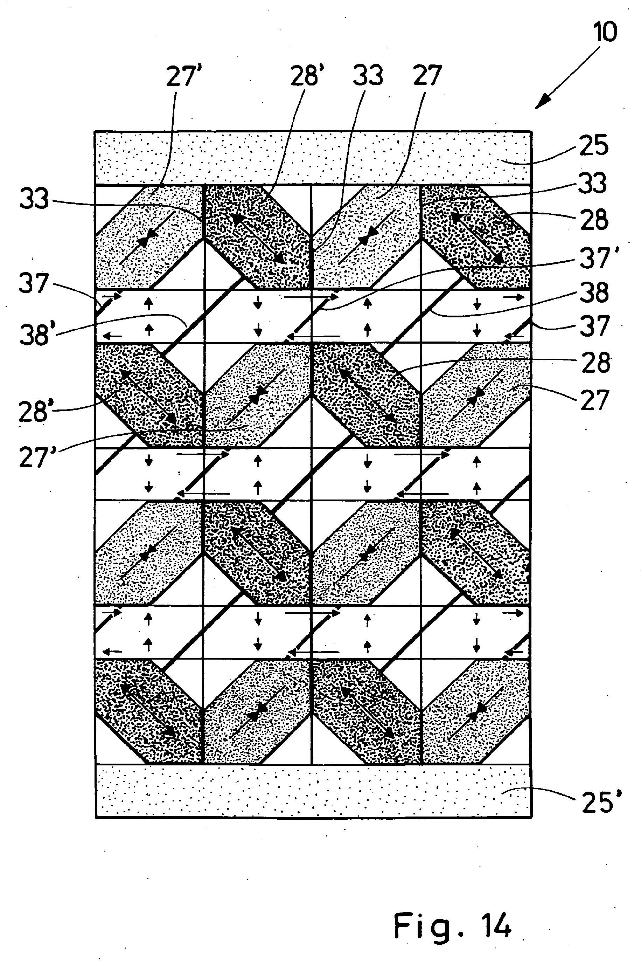

Fig. 14 zeigt eine weitere Ausführungsform einer erfindungsgemäßen piezoelektrischen Vorrichtung 6, wobei die Mantelfläche einer entsprechenden Piezoröhre auch in der Zeichenebene der Fig. 14 abgerollt ist und auch wieder wie im vorherigen Beispiel gem, der Fig. 12 nur ein Teil der oberen ersten Elektrode 25 und ein Teil der unteren ersten Elektrode 25' dargestellt ist.

Es ist erkennbar, dass in langsaxialer Richtung der Piezoröhre 10 vier Quadrupole von Schrägelektroden hintereinander angeordnet sind, wobei jeweils quer zur Längsachse vier Schrägelektroden nebeneinander angeordnet sind. Es sind auch Bereiche vorgesehen, die im Wesentlichen ohne Elektrodenmaterial vorgesehen sind, allerdings mit Elektrodenverbindungen 37 und 37' sowie 38 und 38'. Die Elektrodenverbindung 37 verbindet die ersten Schrägelektroden 27, die in längsaxialer Richtung hintereinander angeordnet sind und die Elektrodenverbindung 37' die ersten Schrägelektroden 27'. Entsprechendes gilt für die Elektrodenverbindung 38 zu den zweiten Schrägelektroden 28 und 38' zu den zweiten Schrägelektroden 28', Es sind auch die entsprechenden Pfeile dargestellt, die für eine Rotationsbewegung bzw. eine rotative Auslenkung der unteren Klemme 40 und der oberen Klemme 41 durch entsprechendes Anlegen von elektrischen Spannungen auf der Piezoröhre 10 existieren.

Die Winkelgeschwindigkeit der Rotation kann entsprechend berechnet werden. Angenommen, es wird ein PZT-4 Material von Staveley Sensors mit einer piezoelektrischen Konstante $d_{31}$ = 0,135 nm/V mit einer Dicke der Piezoröhre von 0,75 mm und einem Durchmesser von 12,7 mm und einer maximalen Spannung von U = 250 V verwendet. In diesem Fall beträgt die lineare Auslenkung für jede Periode T $\Delta x \approx 1,8$ $\mu$m. Bei einer Frequenz von 1 kHz bewegt sich der Rotor somit um 1,8 mm. Hieraus ergibt sich eine Winkelgeschwindigkeit von ungefähr 2,6°/s. Entsprechend ist bei der linearen Bewegung bzw. bei der transversalen Bewegung bei 1 kHz mit einer Geschwindigkeit von 1,8 mm/s. zu rechnen. Es ist eine Steuerung sowohl der Drehbewegungsgeschwindigkeit als auch der linearen Bewegungsgeschwindigkeit möglich.

Es kann auch noch eine Variation der Ausführungsform gemäß Fig. 14 vorgesehen sind, dergestalt, dass beispielsweise zwei Vierergruppen von Schrägelektroden, die nebeneinander quer zur Längsachse angeordnet sind, für die Rotationsbewegung verwendet werden und zwei dieser Gruppen für die translatorische Bewegung. Hierzu müssten dann die Elektrodenverbindungen beispielsweise in der Mitte zwischen der ersten Elektrode 25 und der ersten Elektrode 25' getrennt sein.

Der Gegenstand der Erfindung kann überall dort zum Einsatz kommen, wo der so genannte Inchworm der Firma EXFO, vormals Burleigh, USA, zur Anwendung kommt. Die Erfindung kann also zur hochpräzisen Translations-Positionierung im Bereich von mm und $\mu$ m Verwendung finden. Dabei wird das Einsatzgebiet wesentlich erweitert, insbesondere durch Tieftemperaturtauglichkeit. Völlig neue Anwendungen können erschlossen werden durch die zusätzliche Fähigkeit, hochpräzise Drehbewegungen mit der Möglichkeit sehr kleiner Schrittweiten auszuführen. Dieses erlaubt einen Einsatz im Bereich der Nanotechnologie. Da der Motor völlig ohne Schmiermittel auskommt, ist er insbesondere für den Einsatz im Ultrahochvakuum, etwa auf dem Gebiet der Rastersonden-Mikroskopie, von Vorteil. Anwendungsfelder gibt es beispielsweise auch im Bereich der Luft- und Raumfahrt. Erfindungsgemäß ist auch nur eine einzige Vorrichtung notwendig, um eine stabile und verlässliche Rotations- und Translationsbewegung eines Bewegungskörpers zu ermöglichen.

<u>Bezugszeichenliste</u>

| | |
|---|---|
| 5 | piezoelektrischer Motor |
| 6 | piezoelektrische Vorrichtung |
| 10 | Piezoröhre |
| 11 | Bewegungskörper |
| 12 | äußere Piezoröhre |
| 13 | innere Piezoröhre |
| 14 | Kragen |
| 15 | Längsachse |
| 16 | Halterung |
| 17 | Schlitz |

| 18 | Mittelbereich |
|---|---|
| 19 | Endbereich |
| 20 | Piezostab |
| 21 | innerer Piezokörper |
| 22 | Lager |
| 23 | Halter |
| 24 | Bodenplatte |
| 25, 25' | erste Elektrode |
| 26 | zweite Elektrode |
| 27, 27' | erste Schrägelektrode |
| 28, 28' | zweite Schrägelektrode |
| 29 | Verbindungsstück |
| 30 | Bimorph bzw. Zweischicht-Körper |
| 31 | Kontaktfläche |
| 32 | mittlere Elektrode |
| 33 | Grenzlinie |
| 37, 37' | Elektrodenverbindung |
| 38, 38' | Elektrodenverbindung |
| 40 | untere Klemme |
| 41 | obere Klemme |
| U | Spannung |
| D | Durchmesser |
| h | Höhe |
| b | Breite |
| L | Länge |
| A1 | Ausschnitt |
| A2 | Ausschnitt |

**Patentansprüche**

1. Piezoelektrische Bewegungseinrichtung (5), insbesondere Motor, mit einer piezoelektrischen Vorrichtung (6), die einen Mittelbereich (18) und zwei Endbereiche (19) aufweist, und mit einem Bewegungskörper (11), der in der piezoelektrischen Vorrichtung (6) gelagert ist, wobei ein Endbereich (19) ausgestaltet ist oder beide Endbereiche (19) ausgestaltet sind, um eine Kraft in Richtung des Bewegungskörpers (11), insbesondere queraxial zu einer Längsachse (15) der piezoelektrischen Vorrichtung (6) auf den Bewegungskörper (11) auszuüben, wobei der Mittelbereich (18) ein piezoelektrischer Körper (10, 20) ist und die Endbereiche (19) jeweils wenigstens zwei piezoelektrische Körper (10, 12, 13, 20, 21) umfassen, die miteinander über Kontaktflächen (31) verbunden sind, wobei die Normalen der Kontaktflächen (31) im Wesentlichen parallel zur Richtung der ausgeübten Kraft angeordnet sind, wobei die Endbereiche jeweils einen Bimorph bilden, wobei zwischen den zwei piezoelektrischen Körpern (10, 12, 13, 20, 21) der Endbereiche (19) eine Elektrode (32) angeordnet ist, **dadurch gekennzeichnet, dass** die piezoelektrische Vorrichtung (6) in den Endbereichen (19) längsaxial geschlitzt ausgeführt ist.

2. Piezoelektrische Bewegungseinrichtung nach Anspruch 1, **dadurch gekennzeichnet, dass** an wenigstens einem piezoelektrischen Körper (10, 12, 13, 20, 21) eines Endbereichs (19) an der Oberfläche, die benachbart zum Bewegungskörper (11) angeordnet ist, ein Zwischenkörper (14) aus einem anderen Material als der piezoelektrische Körper (10, 12, 13, 20, 21) vorhenden ist.

3. Piezoelektrische Bewegungseinrichtung nach Anspruch 1 oder 2, **dadurch gekennzeichnet, dass** das Lager (22) Teil der piezoelektrischen Vorrichtung (6) ist.

4. Piezoelektrische Bewegungseinrichtung nach einem der Ansprüche 1 bis 3, **dadurch gekennzeichnet, dass** die piezoelektrische Vorrichtung (6) ein langer an den Endbereichen (19) offener Hohlkörper (10) ist.

5. Piezoelektrische Bewegungseinrichtung nach Anspruch 4, **dadurch gekennzeichnet, dass** der Hohlkörper (10) eine, insbesondere zylindrische, Röhre ist.

6. Piezoelektrische Bewegungseinrichtung (5), insbesondere Motor, mit einer piezoelektrischen Vorrichtung (6), die einen Mittelbereich (18) und zwei Endbereiche (19) aufweist, und mit einem Bewegungskörper (11), der auf oder in einem Lager (22) oder der piezoelektrischen Vorrichtung (6) gelagert ist, wobei ein Endbereich (19) ausgestaltet ist oder beide Endbereiche (19) ausgestaltet sind, um eine Kraft in Richtung des Bewegungskörpers (11), insbesondere queraxial zu einer Längsachse (15) der piezoelektrischen Vorrichtung (6) auf den Bewegungskörper (11) auszuüben, insbesondere nach einem der Ansprüche 1 bis 5, **dadurch gekennzeichnet, dass** der Mittelbereich (18) der piezoelektrischen Vorrichtung (6) wenigstens eine Elektrode (27-28') aufweist, die schräg zur Längsachse (15) der piezoelektrischen Vorrichtung (6) angeordnet ist.

7. Piezoelektrische Bewegungseinrichtung nach Anspruch 6, **dadurch gekennzeichnet, dass** mehrere Elektroden (27-28') schräg zur Längsachse (15) der piezoelektrischen Vorrichtung (6) angeordnet sind, wobei diese in längsaxialer Richtung hintereinander und/oder im Wesentlichen senkrecht hierzu nebeneinander angeordnet sind.

8. Piezoelektrische Bewegungseinrichtung nach Anspruch 6 oder 7, **dadurch gekennzeichnet, dass** der Bewegungskörper (11) drehbar gelagert ist.

9. Piezoelektrische Bewegungseinrichtung nach einem der Ansprüche 6 bis 8, **dadurch gekennzeichnet, dass** wenigstens eine Elektrode (27-28') wenigstens abschnittsweise spiralförmig ist.

10. Piezoelektrische Bewegungseinrichtung nach einem der Ansprüche 7 bis 9, **dadurch gekennzeichnet, dass** wenigstens zwei Elektroden (27, 28; 27', 28') um eine Ebene, die die Längsachse (15) und eine gemeinsame Grenzlinie (33) umfasst, spiegelsymmetrisch angeordnet sind.

11. Piezoelektrische Bewegungseinrichtung nach einem der Ansprüche 1 bis 10, **dadurch gekennzeichnet, dass** der piezoelektrische Körper (10, 20) des Mittelbereichs (18) einstückig mit einem piezoelektrischen Körper (10, 12, 20) eines Endbereichs (19) ist.

12. Verwendung einer piezoelektrischen Bewegungseinrichtung (5) nach einem der Ansprüche 1 bis 11 zur Erzeugung einer translatorischen und/oder rotatorischen Bewegung des Bewegungskörpers (11).

13. Verfahren zur Manipulation eines Bewegungskörpers (11) in oder an einer piezoelektrischen Bewegungseinrichtung (5) nach einem der Ansprüche 7 bis 11, wobei zur längsaxialen Ausdehnung oder Verkürzung des Mittelbereiches (18) der piezoelektrischen Vorrichtung (6) an die schräg zur Längsachse (15) angeordneten Elektroden (27-28') des Mittelbereichs (18) gleichgesinnte, elektrische Potentiale angelegt werden.

14. Verfahren zur Manipulation eines Bewegungskörpers (11) in oder an einer piezoelektrischen Bewegungseinrichtung (5) nach einem der Ansprüche 7 bis 11, wobei zur Rotation des Bewegungskörpers (11) die im Mittelbereich (18) der piezoelektrischen Vorrichtung (6) relativ zur Längsachse (15) quer oder radial nebeneinander angeordneten Elektroden (27-28') mit örtlich alternierenden elektrischen Potentialen versorgt werden.

**Claims**

1. A piezoelectric movement device (5), particularly a motor, with a piezoelectric mechanism (6), which includes a central region (18) and two end regions (19), and a movement body (11), which is mounted in the piezoelectric mechanism (6), wherein an end region (19) or both end regions (19) are shaped to exert a force on the movement body (11) in the direction of the movement body (11) particularly transversely to a longitudinal axis (15) of the piezoelectric mechanism (6), wherein the central region (18) is a piezoelectric body (10, 20) and the end regions (19) each include at least two piezoelectric bodies (10, 12, 13, 20, 21), which are connected together via contact surfaces (31), wherein the normals to the contact surfaces (31) are arranged substantially parallel to the direction of the exerted force, wherein the end regions each constitute a bimorph, wherein arranged between the two piezoelectric bodies (10, 12, 13, 20, 21) of the end regions (19) there is an electrode (32), **characterised in that** the piezoelectric mechanism (6) is longitudinally axially slotted in the end regions (19).

2. A piezoelectric movement device as claimed in claim 1, **characterised in that** an intermediate body (14) of a different material to the piezoelectric body (10, 12, 13, 20, 21) is present on at least one piezoelectric body (10, 12, 13, 20, 21) of an end region (19) on the surface, which is disposed adjacent to the movement body (11).

3. A piezoelectric movement device as claimed in claim 1 or 2, **characterised in that** the mounting (22) is a part of the piezoelectric mechanism (6).

4. A piezoelectric movement device as claimed in one of claims 1 to 3, **characterised in that** the piezoelectric mechanism (6) is a long hollow body (10) open at the end regions (19).

5. A piezoelectric movement device as claimed in claim 4, **characterised in that** the hollow body (10) is a, particularly cylindrical, tube.

6. A piezoelectric movement device (5), particularly a motor, with a piezoelectric mechanism (6), which includes a central region (18) and two end regions (19), and a movement body (11), which is mounted on or in a mounting (22) or the piezoelectric mechanism (6), wherein an end region (19) or both end regions (19) are shaped to exert a force on the movement body (11), in the direction of the moving body (11) particularly transversely to a longitudinal axis (15) of the piezoelectric mechanism (6), particularly as claimed in claims 1 to 5, **characterised in that** the central region (18) of the piezoelectric mechanism (6) includes at least one electrode (27-28'), which is arranged obliquely to the longitudinal axis (15) of the piezoelectric mechanism (6).

7. A piezoelectric movement device as claimed in claim 6, **characterised in that** a plurality of electrodes (27-28') are arranged obliquely to the longitudinal axis (15) of the piezoelectric mechanism (6), wherein they are arranged behind one another in the longitudinal direction and/or next to one another substantially perpendicularly thereto.

8. A piezoelectric movement device as claimed in claim 6 or 7, **characterised in that** the movement body (11) is rotatably mounted.

9. A piezoelectric movement device as claimed in one of claims 6 to 8, **characterised in that** at least one electrode (27-28') is of spiral shape, at least in sections.

10. A piezoelectric movement device as claimed in one of claims 7 to 9, **characterised in that** at least two electrodes (27-28; 27', 28') are arranged mirror symmetrically about a plane, which includes the longitudinal axis (15) and a common boundary line (33).

11. A piezoelectric movement device as claimed in one of claims 1 to 10, **characterised in that** the piezoelectric body (10, 20) of the central region (18) is integral with a piezoelectric body (10, 12, 20) of an end region (19).

12. The use of a piezoelectric movement device (5) as claimed in one of claims 1 to 11 for producing a translational and/or rotary movement of the movement body (11).

13. A method of manipulating a movement body (11) in or on a piezoelectric movement device (5) as claimed in one of claims 7 to 11, wherein electric potentials of the same sense are applied to the electrodes (27-28'), arranged obliquely to the longitudinal axis (15), of the central region (18) in order to extend or shorten the central region (18) in the longitudinal axial direction.

14. A method of manipulating a movement body (11) in or on a piezoelectric movement device (5) as claimed in one of claims 7 to 11, wherein the electrodes (27-28') arranged next to one another in the central region (18) transversely or radially relative to the longitudinal axis (15) are supplied with locally alternating electric potentials for the rotation of the movement body (11).

**Revendications**

1. Dispositif de déplacement (5) piézoélectrique, en particulier moteur, comprenant un dispositif (6) piézoélectrique, qui présente une zone centrale (18) et deux zones d'extrémité (19), et un corps de déplacement (11), qui est monté dans le dispositif (6) piézoélectrique, une zone d'extrémité (19) étant conçue, ou bien les deux zones d'extrémité (19) étant conçues, pour exercer une force en direction du corps de déplacement (11), en particulier dans le sens axial et transversal à un axe longitudinal (15) du dispositif (6) piézoélectrique sur le corps de déplacement (11), la zone centrale (18) étant un corps (10, 20) piézoélectrique et les zones d'extrémité (19) comprenant chacune au moins deux corps (10, 12, 13, 20, 21) piézoélectriques, qui sont reliés l'un à l'autre par des surfaces de contact (31), les normales des surfaces de contact (31) étant disposées sensiblement parallèlement à la direction de la force exercée, les zones d'extrémité formant à chaque fois un bimorphe, une électrode (32) étant disposée entre les deux corps (10, 12, 13, 20, 21) piézoélectriques des zones d'extrémité (19), **caractérisé en ce que** le dispositif (6) piézoélectrique est réalisé de façon fendue dans le sens longitudinal et axial dans les zones d'extrémité (19).

2. Dispositif de déplacement piézoélectrique selon la revendication 1, **caractérisé en ce qu'**un corps intermédiaire (14) à base d'un autre matériau que le corps (10, 12, 13, 20, 21) piézoélectrique est présent sur au moins un corps (10, 12, 13, 20, 21) piézoélectrique d'une zone d'extrémité (19) sur la surface, qui est disposée à proximité du corps de déplacement (11).

3. Dispositif de déplacement piézoélectrique selon la revendication 1 ou la revendication 2, **caractérisé en ce que** le palier (22) fait partie du dispositif (6) piézoélectrique.

4. Dispositif de déplacement piézoélectrique selon l'une des revendications 1 à 3, **caractérisé en ce que** le dispositif (6) piézoélectrique est un corps creux (10) long et ouvert sur les zones d'extrémité (19).

5. Dispositif de déplacement piézoélectrique selon la revendication 4, **caractérisé en ce que** le corps creux (10) est un tube, en particulier cylindrique.

6. Dispositif de déplacement (5) piézoélectrique, en particulier moteur, comprenant un dispositif (6) piézoélectrique, qui présente une zone centrale (18) et deux zones d'extrémité (19), et un corps de déplacement (11), qui est monté sur ou dans un palier (22) ou le dispositif (6) piézoélectrique, une zone d'extrémité (19) étant conçue, ou les deux zones d'extrémité (19) étant conçues, pour exercer une force en direction du corps de déplacement (11), en particulier dans le sens transversal et axial par rapport à un axe longitudinal (15) du dispositif (6) piézoélectrique sur le corps de déplacement (11), en particulier selon l'une des revendications 1 à 5, **caractérisé en ce que** la zone centrale (18) du dispositif (6) piézoélectrique présente au moins une électrode (27-28'), qui est disposée en biais par rapport à l'axe longitudinal (15) du dispositif (6) piézoélectrique.

7. Dispositif de déplacement piézoélectrique selon la revendication 6, **caractérisé en ce que** plusieurs électrodes (27-28') sont disposées en biais par rapport à l'axe longitudinal (15) du dispositif (6) piézoélectrique, ces électrodes étant disposées les unes derrière les autres dans le sens longitudinal et axial et/ou pratiquement perpendiculairement à cette direction les unes à côté des autres.

8. Dispositif de déplacement piézoélectrique selon la revendication 6 ou 7, **caractérisé en ce que** le corps de déplacement (11) est monté rotatif.

9. Dispositif de déplacement piézoélectrique selon l'une des revendications 6 à 8, **caractérisé en ce qu'**au moins une électrode (27-28') est en forme de spirale au moins par tronçons.

10. Dispositif de déplacement piézoélectrique selon l'une des revendications 7 à 9, **caractérisé en ce qu'**au moins deux électrodes (27, 28 ; 27', 28') sont disposées avec une symétrie spéculaire autour d'un plan qui comprend l'axe longitudinal (15) et une ligne limite (33) commune.

11. Dispositif de déplacement piézoélectrique selon l'une des revendications 1 à 10, **caractérisé en ce que** le corps (10, 20) piézoélectrique de la zone centrale (18) est conçu d'une seule pièce avec un corps (10, 12, 20) piézoélectrique d'une zone d'extrémité (19).

12. Utilisation d'un dispositif de déplacement (5) piézoélectrique selon l'une des revendications 1 à 11 pour générer un mouvement de translation et/ou de rotation du corps de déplacement (11).

13. Procédé pour manipuler un corps de déplacement (11) dans ou sur un dispositif de déplacement (5) piézoélectrique selon l'une des revendications 7 à 11, des potentiels électriques et allant dans le même sens étant appliqués sur les électrodes (27-28'), disposées en biais par rapport à l'axe longitudinal (15), de la zone centrale (18) pour l'extension ou le raccourcissement dans le sens longitudinal et axial de la zone centrale (18) du dispositif (6) piézoélectrique.

14. Procédé pour manipuler un corps de déplacement (11) dans ou sur un dispositif de déplacement (5) piézoélectrique selon l'une des revendications 7 à 11, les électrodes (27-28'), disposées les unes à côté des autres, transversalement ou radialement par rapport à l'axe longitudinal (15) dans la zone centrale (18) du dispositif (6) piézoélectrique étant alimentées avec des potentiels électriques et alternant localement pour la rotation du corps de déplacement (11).

Fig. 1

Fig. 2

Fig. 3

EP 1 941 559 B1

Fig. 4

Fig. 5

Fig. 6

Fig. 7

Fig. 8

Fig. 9

Fig. 9a

Fig. 10

Fig. 11

Fig. 12

Fig. 13a

Fig. 13b

Fig. 13c

Fig. 13d

EP 1 941 559 B1

21

Fig. 14

EP 1 941 559 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3902084 A
- US 3902085 A
- EP 0309886 A2
- US 5907212 A
- WO 9506428 A1
- US 5365296 A

**In der Beschreibung aufgeführte Nicht-Patentliteratur**

- **Chen, C.J.** Introduction to Scanning Tunneling Microscopy. Oxford Univ. Press, 1993
- **Chen, C.J.** Introduction to Scanning Tunneling Microscopy. Oxford University Press, 1993, 223, 224